# EUROPEAN PATENT APPLICATION

(11) **EP 4 748 503 A1**
(43) Date of publication of application: **27.05.2026**
(21) Application number: 23952075.2
(22) Date of filing: 06.12.2023
(51) Int. Cl.: B05D 3/02, F26B 13/18, H01M 4/04

(54) **OVEN AND COATING DEVICE**

(30) Priority: 15.09.2023 CN 202322507485 U
(71) Applicant: Contemporary Amperex Technology Co., Limited, Ningde, Fujian 352100 (CN)
(72) Inventor: LIU, Mingli, Ningde, Fujian 352100 (CN); SHANG, Hongwu, Ningde, Fujian 352100 (CN)
(74) Representative: Ziebig Hengelhaupt Intellectual Property Attorneys Patentanwaltskanzlei PartGmbB
(86) International application number: PCT/CN2023/136779
(87) International publication number: WO 2025/055152

(57) **Abstract**

Provided is an oven (100), which is used for heating an electrode plate (90), and the oven (100) comprises a box body (10) and a plurality of heating rollers (20). Among all the heating rollers (20), at least two adjacent heating rollers (20) can rotate in opposite directions relative to the box body (10). All the heating rollers (20) are arranged at intervals in the box body (10) in a first direction (X), and all the heating rollers (20) jointly support and guide the electrode plate (90) to travel in the first direction (X).

## Description

### CROSS-REFERENCE

The present application is based on Chinese patent application No. 2023225074850 filed on September 15, 2023 and entitled "OVEN AND COATING DEVICE", which is incorporated herein by reference in its entirety.

### TECHNICAL FIELD

The present application relates to the field of battery production equipment, in particular to an oven and a coating device.

### BACKGROUND

In the field of electric vehicles, power batteries, as power sources of electric vehicles, play an irreplaceable and important role. The battery is composed of a box body and a plurality of battery cells accommodated within the box body. A battery cell is obtained by assembling a positive electrode plate, a negative electrode plate, and a separator into an electrode assembly (bare battery cell) through winding, stacking or other methods, then encasing it in a shell, and subsequently injecting an electrolyte solution into it. Among others, the electrode plate needs to undergo a coating process during production, that is, an active material layer is coated on the current collector of the electrode plate to form a coating area on one side of the current collector. After the coating is completed, it needs to be dried to obtain the required electrode plate.

However, the current electrode plates are prone to curling and cracking during the drying process, which reduces the production efficiency of the electrode plates.

### SUMMARY OF THE INVENTION

In view of the above problems, the present application provides an oven and a coating device, which can improve problems such as curling and cracking of the electrode plate during the drying process.

According to an aspect of the present application, the present application provides an oven for heating a member to be oven-dried. The oven comprises a box body and a plurality of heating rollers. Among all the heating rollers, at least two adjacent heating rollers can rotate in opposite directions relative to the box body, the plurality of heating rollers are distributed at intervals in the box body along a first direction, all the heating rollers jointly support and guide the member to be oven-dried to travel along the first direction, an angle of contact a is formed between the heating rollers and the member to be oven-dried, and the angle of contact a satisfies: 30°≤a≤180°.

In the technical solution of the embodiment of the present application, because the heating roller and the electrode plate are in contact heating, and the travelling path of the electrode plate is set to be in a shape similar to a wave, the tension of the electrode plate located between two adjacent heating rollers can be increased to produce a certain restraining force on the electrode plate, which can reduce the probability of the electrode plate generating drying stress and shrinking in volume after drying, thereby reducing the probability of curling and cracking of the electrode plate.

In some embodiments, a first hollow cavity is formed inside the heating roller, the heating roller is rotatably connected to the box body, the surface of the heating roller is used for tensioning the member to be oven-dried, and the first hollow cavity is used for connecting an external heat exchange medium flow path.

This arrangement can improve the constancy of heat of each part of the heating roller, so as to evenly heat each part of the electrode plate.

In some embodiments, the oven further comprises a tensioning roller, each heating roller is provided with at least one tensioning roller, the tensioning roller and the heating roller rotate in opposite directions, and both the heating roller and the tensioning roller are used for guiding the electrode plate.

A tensioning roller is arranged next to the heating roller, the incorporation of the tensioning roller can increase the contact area between the electrode plate and the heating roller, thereby increasing the angle of contact formed between the electrode plate and the heating roller, so as to further increase the tension of the electrode plate located between two adjacent heating rollers to generate a certain restraining force on the electrode plate, which can reduce the probability of the electrode plate generating drying stress and shrinking in volume after drying, thereby reducing the probability of curling and cracking of the electrode plate.

In some embodiments, the diameter of the tensioning roller is smaller than the diameter of the heated roller.

Setting the diameter of the tensioning roller to be smaller than the diameter of the heating roller can increase the contact area between the electrode plate and the heating roller, thereby appropriately increasing the angle of contact formed between the electrode plate and the heating roller.

In some embodiments, along the first direction, a tensioning roller is provided on both sides of each heating roller, and an angle of contact is formed between the heating roller and the member to be oven-dried, and the angle of contact is less than or equal to 180°.

In this way, the angle of contact formed between the electrode plate and the heating roller can be maximized, thereby increasing the tension of the electrode plate located between two adjacent heating portions to reduce the phenomenon that the electrode plate is attached to the heating roller and not easy to fall off or the electrode plate curls up.

In some embodiments, the heating rollers each comprise a feed heating roller and a discharge heating roller, the feed heating roller is located at the feed end of the box body, the discharge heating roller is located at the discharge end of the box body, both the feed heating roller and the discharge heating roller are provided with a tensioning roller, and the tensioning roller of the feed heating roller and the tensioning roller of the discharge heating roller are arranged facing each other.

A tensioning roller is provided on both sides of the other heating rollers along the first direction, an angle of contact is formed between the heating roller and the member to be oven-dried, and the angle of contact is less than or equal to 180°.

In this way, the tension on the electrode plate is great, which can reduce the phenomenon that the electrode plate is attached to the heating roller and not easy to fall off or the electrode plate curls up.

In some embodiments, a second hollow cavity is formed inside the tensioning roller, the surface of the tensioning roller is used for tensioning the member to be oven-dried, and the second hollow cavity is used for connecting an external heat exchange medium flow path.

This can improve the constancy of heat of each part of the tensioning roller, so as to evenly heat each part of the electrode plate. Among others, the tensioning roller and the heating roller can heat the electrode plate at the same time, which can speed up the heating speed for the electrode plate.

In some embodiments, the distance between two adjacent heating rollers is L, which satisfies: 400 mm ≤ L < 1400 mm.

The tension of the electrode plate can be adjusted by adjusting the distance between two adjacent heating rollers to reduce the probability of curling of the electrode plate during the drying process.

In some embodiments, the oven further comprises an air supply member, the air supply member is disposed on an inner wall of the oven, and the air supply port of the air supply member is disposed toward the direction where the heating roller is located.

When the heating roller heats the electrode plate, the hot air discharged from the air supply member can be blown toward the electrode plate, so as to implement a heating mode with the heating roller as the main component and the air supply member as the auxiliary component, thereby accelerating the heating efficiency of the electrode plate.

In some embodiments, the oven further comprises a first mounting portion and a second mounting portion, the heating roller is disposed between the first mounting portion and the second mounting portion, and at least one of the first mounting portion and the second mounting portion is provided with an air supply member.

The above arrangement expands the positions where the air supply member can be mounted and enriches the diversity of the internal structure of the oven.

In some embodiments, the air supply members provided on the first mounting portion and the air supply members provided on the second mounting portion are arranged in a staggered manner. The electrode plate can be heated in multiple directions at the same time to speed up the heating speed for the electrode plate.

In some embodiments, the oven also comprises a moisture detector, the box body comprises a feed end and a discharge end, the feed end and the discharge end are arranged opposite to each other along the first direction, the heating roller is located between the feed end and the discharge end, and the moisture detector is located on the side of the feed end away from the discharge end.

When the moisture content of the electrode plate exceeds the preset value, the oven will stop running to remind the user that the moisture content of the electrode plate to be tested is too high and the user needs to replace it with an electrode plate with a lower moisture content.

In some embodiments, the oven further comprises a flattening member, the flattening member is disposed at the feed end and the flattening member is used for flattening the member to be oven-dried.

Before the electrode plate enters the area where the heating roller is located, the flattening member can flatten the electrode plate to smooth the surface of the electrode plate and reduce the probability of wrinkling of the surface of the electrode plate.

According to an aspect of the present application, the present application provides a coating device, which comprises the oven in the above embodiments.

The foregoing description is merely an overview of the technical solutions in the present application. In order that technical means of the present application can be understood more clearly so that the technical means can be implemented according to content of the specification, and in order that the foregoing and other objectives, features, and advantages of the present application can be understood more clearly, specific embodiments of the present application are described below.

### BRIEF DESCRIPTION OF DRAWINGS

In order to more clearly illustrate the technical solutions of the embodiments of the present application, the drawings required in the embodiments of the present application will be described briefly below. Apparently, the drawings described below depict merely some embodiments of the present application. For those of ordinary skill in the art, other drawings can also be obtained based on these drawings without any creative effort. In the drawings:
FIG. 1 is a schematic structural diagram of an oven according to one or more embodiments.
FIG. 2 is a partial schematic diagram of an electrode plate attached to a heating roller according to one or more embodiments.
FIG. 3 is a schematic structural diagram of an electrode plate travelling as attached to a heating roller according to one or more embodiments.
FIG. 4 is a schematic structural diagram of an oven provided with a tensioning roller according to one or more embodiments.
FIG. 5 is a schematic structural diagram of an oven provided with a tensioning roller according to one or more embodiments.
FIG. 6 is a schematic structural diagram of an oven provided with a tensioning roller according to one or more embodiments.
FIG. 7 is a schematic structural diagram of an oven provided with both a first part and a second part according to one or more embodiments.

### Reference numerals:

100. Oven;
10. Box body; 11. Feed end; 12. Discharge end;
20. Heating roller; 20a. Feed heating roller; 20b. Discharge heating roller;
30. Tensioning roller; 40. Air supply member; 50. First mounting portion; 60. Second mounting portion; 70. Moisture detector; 80. Flattening member; 90. Electrode plate; X, First direction.

### DETAILED DESCRIPTION

The embodiments of the technical solutions of the present application will be described in detail below with reference to the accompanying drawings. The following embodiments are only used to more clearly illustrate the technical solutions of the present application, therefore only as examples, and cannot be used to limit the scope of protection of the present application.

Unless otherwise defined, all technical and scientific terms used herein have the same meanings as those commonly understood by those skilled in the art to which the present application pertains to. The terms used herein are for the purpose of describing specific embodiments only and are not intended to limit the present application. The terms "including" and "having" and any variations thereof in the specification and claims of the present application and the aforementioned Brief Description of Drawings are intended to cover non-exclusive inclusion.

In the description of the embodiments of the present application, if the technical terms "first", "second" or the like are present, they are only used for distinguishing different objects, and cannot be understood as indicating or implying relative importance or implying the number, specific order or primary and secondary relationship of the technical features indicated. In the description of the embodiments of the present application, the meaning of "a plurality of" is two or more, unless otherwise explicitly and specifically defined.

Reference to "an embodiment" herein means that a particular feature, structure, or characteristic described with reference to an embodiment can be included in at least one embodiment of the present application. The appearance of this phrase in various places in the specification does not necessarily refer to the same embodiment, nor is it a separate or alternative embodiment that is mutually exclusive with other embodiments. It is understood explicitly and implicitly by those skilled in the art that the embodiments described herein can be combined with other embodiments.

In the description of the embodiments of the present application, if the term "and/or" is present, it is merely an association that describes the associated object, indicating that there can be three kinds of relationships, such as A and/or B, which can be denoted as: the existence of A alone, the existence of A and B at the same time, and the existence of B alone. In addition, if present, the character "/" herein generally means that there is an "or" relationship between associated objects therebefore and thereafter.

In the description of the embodiments of the present application, if present, the term "a plurality of" refers to more than two (including two). Similarly, "a plurality of groups" refers to more than two groups (including two groups), and "a plurality of sheets" refers to more than two sheets (including two sheets).

In the description of the embodiments of the present application, the orientation or positional relationships indicated by the technical terms "center", "longitudinal", "transverse", "length", "width", "thickness", "upper", "lower", "front", "back", "left", "right", "vertical", "horizontal", "top", "bottom", "inner", "outer", "clockwise", "counterclockwise", "axial", "radial", "circumferential", etc., if present, are based on the orientation or positional relationships shown in the accompanying drawings, and are only for convenience of description of the present application and simplification of the description, rather than indicating or implying that the indicated apparatus or element must have a specific orientation, be constructed and operated in a specific orientation, and therefore, cannot be understood as a limitation to the embodiments of the present application.

In the description of the embodiments of the present application, unless otherwise expressly specified and limited, if present, the technical terms "mount," "couple," "connect," "fix", etc., should be understood in a broad sense, such as, a fixed connection, a detachable connection, or an integral connection; or a mechanical connection, or an electrical connection; or direct connection, indirect connection through an intermediate medium, or an internal communication of two elements, or interaction between two elements. For those of ordinary skill in the art, the specific meaning of the above terms in the embodiments of present application may be understood depending on the specific situation.

The battery mentioned in the embodiments of the present application refers to a single physical module comprising one or more battery cells to provide higher voltage and capacity. For example, the battery mentioned in the present application may include a battery module, a battery pack, or the like. The battery generally includes a box body for encapsulating one or more battery cells. The box body can prevent a liquid or another foreign matter from affecting charging or discharging of the battery cell.

In order to meet different power requirements, the battery may include a plurality of battery cells, where the plurality of battery cells may be in series connection, parallel connection or series-parallel connection. The series-parallel connection refers to a combination of series connection and parallel connection. The battery cell comprises an electrode assembly and an electrolyte solution. The electrode assembly is composed of a positive electrode plate, a negative electrode plate and a separator. The battery cell operates mainly relying on movement of metal ions between the positive electrode plate and the negative electrode plate.

A battery cell is obtained by assembling a positive electrode plate, a negative electrode plate, and a separator into a bare battery cell through winding, stacking or other methods, then encasing it in a case, and subsequently injecting an electrolyte solution into it. During the production process of electrode plates (a general term for positive and negative electrode plates), they need to be dried. When the electrode plates enter an oven, as the moisture content of the electrode plates decreases, drying stress will form on the parts of the electrode plates that shrink due to drying. The release of this drying stress causes the electrode plates to curl up inside the oven. After leaving the oven, the curled parts of the electrode plates are flattened by bypass rollers and are prone to cracking.

In order to improve the problems of cracking and curling of the electrode plate and other members to be dried after entering the oven, some embodiments of the present application provide an oven, where a plurality of heating rollers distributed along a first direction are provided in the box body of the oven, and all the heating rollers are used to jointly support and guide the electrode plate to be dried to travel along the first direction. Because two adjacent heating rollers rotate in opposite directions relative to the box body, and the angle of contact formed between the electrode plate and each heating roller is large, the electrode plate can be restrained to reduce the degree of volume shrinkage of the electrode plate during the drying process and reduce the generation of drying stress, thereby reducing the probability of curling and cracking of the electrode plate.

The oven provided in the embodiment of the present application can be used for, but is not limited to, drying lithium battery electrode plates or other materials having a film layer on the surface that need to be oven-dried. The following description will take the electrode plate as an example of the member to be oven-dried.

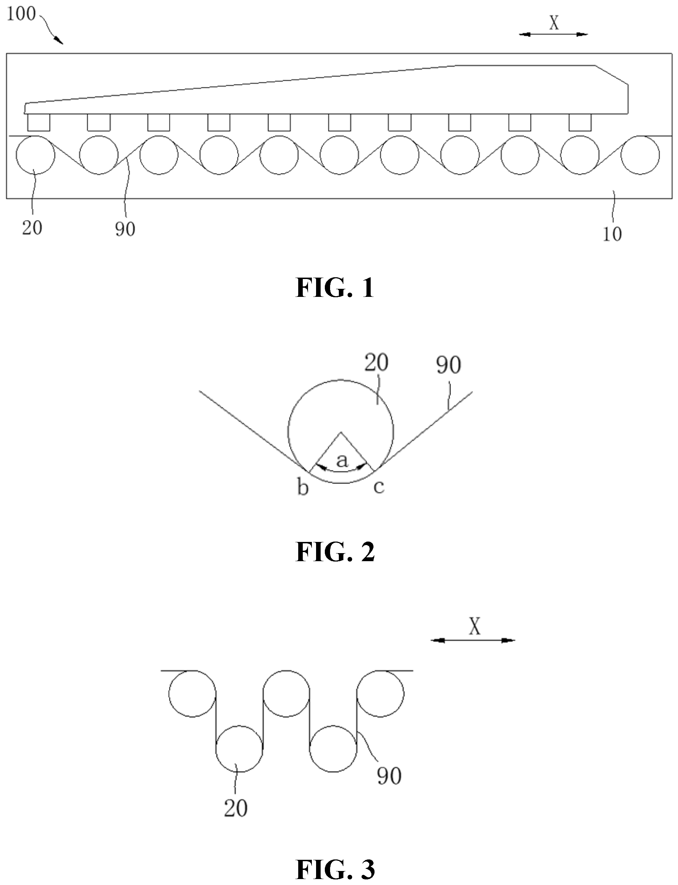

Referring to FIG. 1, some embodiments of the present application provide an oven 100, which can be used for heating a member to be oven-dried (such as an electrode plate 90). The oven 100 comprises a box body 10 and a plurality of heating rollers 20. Among all the heating rollers 20, at least two adjacent heating rollers 20 can rotate in opposite directions relative to the box body 10, a plurality of heating rollers 20 are distributed at intervals in the box body 10 along the first direction X, and all the heating rollers 20 jointly support and guide the member to be oven-dried to travel along the first direction X. An angle of contact a is formed between the heating roller 20 and the member to be oven-dried, and the angle of contact a satisfies: 30°≤a≤180°.

The shape of the box body 10 may be, but is not limited to, a hexahedron, and a cavity extending along the first direction X may be defined inside the box body 10.

During use, the surface of the heating roller 20 can generate heat. The heating method of the heating roller 20 can be, but is not limited to, resistance heating, electromagnetic induction heating, or introducing hot oil into the heating roller 20 to increase the surface temperature of the heating roller 20. The rotation directions of two adjacent heating rollers 20 are opposite. For example, the heating rollers 20 arranged along the first direction X can rotate in a clockwise manner and in a counterclockwise manner alternately in sequence.

As shown in FIG. 1, the box body 10 may comprise a first end and a second end disposed opposite to each other along the first direction X. From the first end to the second end, a plurality of heating rollers 20 may be sequentially distributed at intervals in the box body 10. In order to facilitate the description of the cooperation between the electrode plate 90 and the heating roller 20, the heating rollers 20 distributed from the first end to the second end may be named as the first heating roller, the second heating roller, the third heating roller, and so on.

Assuming that the electrode plate 90 is conveyed from the first end to the second end, when the electrode plate 90 is placed on the heating roller 20 and starts to travel, the electrode plate 90 first goes around the top of the first heating roller, then goes around the bottom of the second heating roller, and then goes around the top of the third heating roller, and so on, until the electrode plate 90 is conveyed to the second end. In other words, the travelling path of the electrode plate 90 is in a shape similar to a wave. When the electrode plate 90 passes above or below the heating roller 20, the electrode plate 90 can contact the heating roller 20 and form an angle of contact. The angle of contact here refers to the central angle corresponding to the arc formed by the electrode plate 90 in contact with the heating roller 20.

As shown in FIG. 2, when the electrode plate 90 is guided by the heating roller 20 for travelling, the two contact endpoints between the electrode plate 90 and the heating roller 20 are b and c respectively. The central angle corresponding to the arc formed by b connected to c is a, that is, the angle of contact a.

Because the heating roller 20 and the electrode plate 90 are in contact heating, and the travelling path of the electrode plate 90 is set to be in a shape similar to a wave, the tension of the electrode plate 90 located between two adjacent heating rollers 20 can be increased to produce a certain restraining force on the electrode plate 90, which can reduce the probability of the electrode plate 90 generating drying stress and shrinking in volume after drying, thereby reducing the probability of curling and cracking of the electrode plate 90.

It should be noted that the above-mentioned oven 100 can be used alone or in conjunction with a common oven 100. For example, when the weight loss rate of the electrode plate 90 is greater than 20%, the electrode plate 90 can be oven dried by using a common oven 100. When the weight loss rate of the electrode plate 90 is less than 20%, the oven 100 provided in the embodiment of the present application can be used to reduce the probability of curling and cracking of the electrode plate 90 after drying.

Further referring to FIG. 1, In some embodiments, a first hollow cavity (not shown) is formed inside the heating roller 20, the heating roller is rotatably connected to the box body 10, the surface of the heating roller 20 is used for tensioning the member to be oven-dried, and the first hollow cavity is used for connecting an external heat exchange medium flow path.

The external heat exchange medium flow path may include, but is not limited to, a heat source and pipes that provide thermal energy such as hot oil and hot air. The heat source may be communicated with the first hollow cavity through a pipe to continuously provide a heat source for the first hollow cavity.

One end of the first hollow cavity is communicated with a heat source, and the other end can be communicated with a storage member. After hot oil or the like flows into the first hollow cavity and undergoes heat exchange, it can flow out of the first hollow cavity and enter the storage member, so that the storage member can be used for storing hot oil or other substances with reduced heat.

When the heating roller 20 is working, hot oil may flow in from one end of the first hollow cavity, undergo heat exchange in the first hollow cavity, and then flow out from the other end of the first hollow cavity, and this process is repeated until the heating roller 20 stops working. This arrangement can improve the constancy of heat of each part of the heating roller 20, so as to evenly heat each part of the electrode plate 90.

In other embodiments, the storage member is provided with a heating device and is communicated with an external heat exchange medium flow path. In this way, the heating device can heat the cooled substance in the storage member and transport it back to the first hollow cavity for heat exchange to achieve recycling.

As shown in FIG. 3, the heating rollers 20 may be arranged in a staggered manner along the first direction X, and the angle of contact formed between the electrode plates 90 and some of the heating rollers 20 may be equal to 180°.

Controlling the angle of contact within a certain range can prevent the angle of contact from being too large or too small. If the angle of contact is too large, it means that the contact area between the electrode plate 90 and the heating roller 20 is larger, and the friction force generated between the electrode plate 90 and the heating roller 20 is larger. In this case, the electrode plate 90 may be attached to the heating roller 20 and not easy to fall off.

If the angle of contact is too small, it means that the contact area between the electrode plate 90 and the heating roller 20 is smaller, and the friction force generated between the electrode plate 90 and the heating roller 20 is smaller. In this case, the tension of the electrode plate 90 located between two adjacent heating rollers 20 is smaller, and the electrode plate 90 generates drying stress during the drying process and curls up under the action of the drying stress.

Therefore, by controlling the angle of contact within a certain range, the electrode plate 90 can have a more appropriate tension, thereby reducing the phenomenon that the electrode plate 90 is attached to the heating roller 20 and not easy to fall off or the electrode plate 90 curls up.

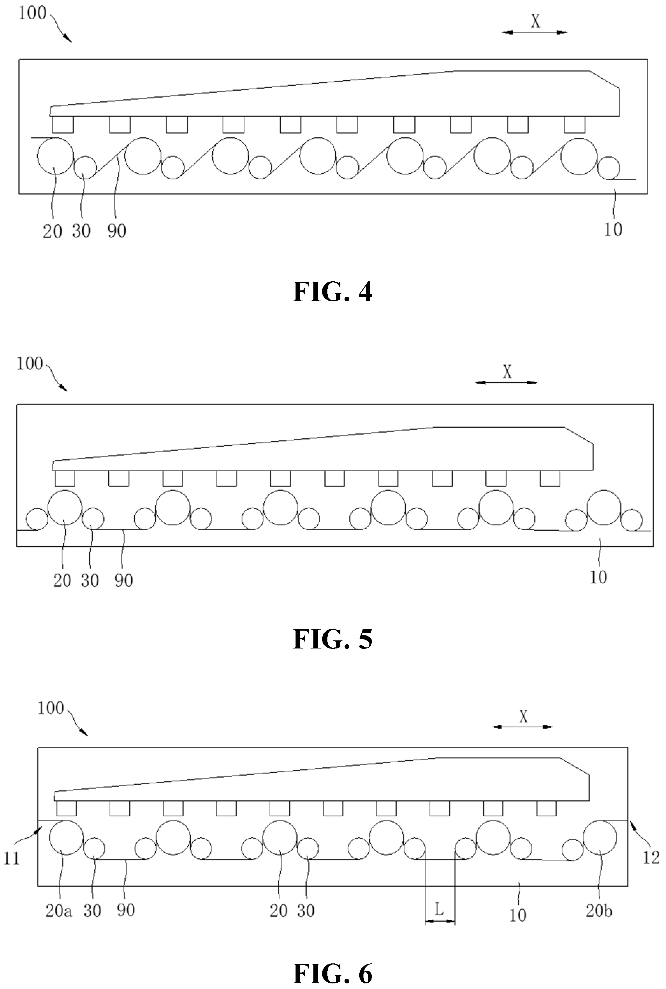

Referring to FIG. 4, in some embodiments, the oven 100 further comprises a tensioning roller 30, each heating roller 20 is provided with at least one tensioning roller 30, the tensioning roller 30 and the heating roller 20 rotate in opposite directions, and both the heating roller 20 and the tensioning roller 30 are used for guiding the electrode plate 90.

The tensioning roller 30 and the heating roller 20 are arranged in parallel, and the tensioning roller 30 and the heating roller 20 rotate in different directions respectively. In some examples, as shown in FIG. 4, a tensioning roller 30 is provided for each heating roller 20 on the same side along the first direction X. In some other examples, as shown in FIG. 5, along the first direction X, a tensioning roller 30 is provided on both sides of the heating roller 20.

Because the travelling path of the electrode plate 90 as it passes through the heating roller 20 and the tensioning roller 30 is in a shape similar to a wave, compared to not having a tension roller 30 placed beside the heating roller 20, the incorporation of the tensioning roller 30 can increase the contact area between the electrode plate 90 and the heating roller 20, thereby increasing the angle of contact formed between the electrode plate 90 and the heating roller 20, so as to further increase the tension of the electrode plate 90 located between two adjacent heating rollers 20 to generate a certain restraining force on the electrode plate 90, which can reduce the probability of the electrode plate 90 generating drying stress and shrinking in volume after drying, thereby reducing the probability of curling and cracking of the electrode plate 90.

Further referring to FIG. 5, in some embodiments, the diameter of the tensioning roller 30 is smaller than the diameter of the heated roller 20.

Compared with setting the diameter of the tensioning roller 30 to be greater than or equal to the diameter of the heating roller 20, the embodiment of the present application sets the diameter of the tensioning roller 30 to be smaller than the diameter of the heating roller 20, which can increase the contact area between the electrode plate 90 and the heating roller 20, thereby increasing the angle of contact formed between the electrode plate 90 and the heating roller 20.

To sum up, setting the diameter of the tensioning roller 30 to be smaller than the diameter of the heating roller 20 can increase the contact area between the electrode plate 90 and the heating roller 20, thereby appropriately increasing the angle of contact formed between the electrode plate 90 and the heating roller 20.

Referring to FIG. 5, in some embodiments, along the first direction X, a tensioning roller 30 is provided on both sides of each heating roller 20, and an angle of contact is formed between the heating roller 20 and the member to be oven-dried, and the angle of contact is less than or equal to 180°.

Exemplarily, as shown in FIG. 5, when the electrode plate 90 is placed on the heating roller 20 for travelling, a heating roller 20 provided with two tensioning rollers 30 is regarded as a group of heating portions. Taking one group of heating portions as an example, the travelling path of the electrode plate 90 is roughly in a wave shape, and the electrode plate 90 passes around the first tensioning roller 30, the heating roller 20 and the second tensioning roller 30 in turn. In this case, the angle of contact formed between the electrode plate 90 and the heating roller 20 can be as close to 180° as possible.

This process is repeated, and the electrode plate 90 has the same travelling path in each group of heating portions, that is, the angle of contacts formed between each heating roller 20 and the electrode plate 90 are equal.

In the above solution, the angle of contact formed between the electrode plate 90 and the heating roller 20 can be maximized, thereby increasing the tension of the electrode plate 90 located between two adjacent heating portions to reduce the phenomenon that the electrode plate 90 is attached to the heating roller 20 and not easy to fall off or the electrode plate 90 curls up.

Referring to FIG. 6, in some embodiments, all the heating rollers 20 comprise a feed heating roller 20a and a discharge heating roller 20b, the feed heating roller 20a is located at the feed end 11 of the box body 10, the discharge heating roller 20b is located at the discharge end 12 of the box body 10, the feed heating roller 20a and the discharge heating roller 20b are both provided with a tensioning roller 30, and the tensioning roller 30 of the feed heating roller 20a and the tensioning roller 30 of the discharge heating roller 20b are arranged facing each other; the remaining heating rollers 20 are each provided with a tensioning roller 30 on both sides along the first direction X, and an angle of contact is formed between the heating roller 20 and the member to be oven-dried, and the angle of contact is less than or equal to 180°.

Exemplarily as shown in FIG. 6, the feed end 11 and the discharge end 12 of the box body 10 may be distributed along the first direction X, with the heating roller 20 closest to the feed end 11 being regarded as the feed heating roller 20a, and the heating roller 20 closest to the discharge end 12 being regarded as the discharge heating roller 20b. Each of the feed heating roller 20a and the discharge heating roller 20b is provided with a tensioning roller 30, and each of the other heating rollers 20 is provided with two tensioning rollers 30. When the electrode plate 90 is placed on the heating roller 20 for travelling, the travelling path of the electrode plate 90 is substantially in a wave shape. In this case, the angle of contact formed between each heating roller 20 and the electrode plate 90 is approximately equal to 180°, and the tension on the electrode plate 90 is relatively large, which can reduce the phenomenon that the electrode plate 90 is attached to the heating roller 20 and not easy to fall off or it curls up.

In some embodiments, the tensioning roller 30 may have only a transmission function, or may have both transmission and heating functions.

When the tensioning roller 30 has both transmission and heating functions, a second hollow cavity is formed inside the tensioning roller 30, the surface of the tensioning roller 30 is used for tensioning the member to be oven-dried, and the second hollow cavity is used for connecting an external heat exchange medium flow path.

When the tensioning roller 30 is working, hot oil may flow in from one end of the second hollow cavity, undergo heat exchange in the second hollow cavity, and then flow out from the other end of the second hollow cavity, and this process is repeated until the tensioning roller 30 stops working. This arrangement can improve the constancy of heat of each part of the tensioning roller 30, so as to evenly heat each part of the electrode plate 90. Among others, the tensioning roller 30 and the heating roller 20 can heat the electrode plate 90 at the same time, which can speed up the heating speed for the electrode plate 90.

In some embodiments, the distance between two adjacent heating rollers 20 is L, which satisfies: 400 millimeters (mm) ≤ L < 1400 millimeters (mm).

As shown in FIG. 6, L refers to the shortest distance between the roller surfaces of two adjacent heating rollers 20.

Exemplarily, as shown in FIG. 6, each heating roller 20 is provided with a tensioning roller 30, the distance between the tensioning rollers 30 corresponding to two adjacent heating rollers 20 is 200 mm, and the angle of contact formed between each heating roller 20 and the electrode plate 90 is 180°. In this case, the heating roller 20 can be used to control the torque and thus the tension of the electrode plate 90, so that the restraining force on the electrode plate 90 is larger, which can reduce the probability of the electrode plate 90 curling up due to drying.

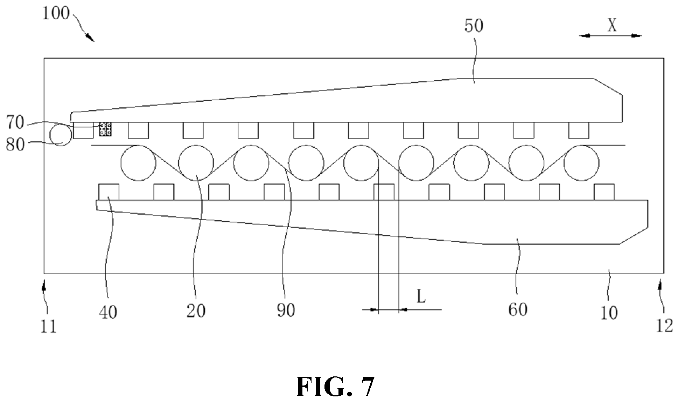

In other examples, as shown in FIG. 7, along the first direction X, the distance between two adjacent heating rollers 20 is 500 mm, and the angle of contact formed between each heating roller 20 and the electrode plate 90 is 45°. When the heating roller 20 is heated to 200°C, after the electrode plate 90 moves 5 m in the oven 100, the weight loss rate of the resulting electrode plate 90 can be reduced to 1% and the electrode plate 90 is flat and has no curling in the oven 100.

In this way, the tension of the electrode plate 90 can be adjusted by adjusting the distance between two adjacent heating rollers 20 to reduce the probability of curling of the electrode plate 90 during the drying process.

Referring to FIG. 7, in some embodiments, the oven 100 further comprises an air supply member 40, the air supply member 40 is disposed on an inner wall of the oven 100, and the air supply port of the air supply member 40 is disposed toward the direction where the heating roller 20 is located.

The air supply member 40 may be an air nozzle disposed in the oven 100, and its number may have a one-to-one relationship with the number of the heating rollers 20 or may be more than the number of the heating rollers 20.

When the heating roller 20 heats the electrode plate 90, the hot air discharged from the air supply member 40 can be blown toward the electrode plate 90, so as to implement a heating mode with the heating roller 20 as the main component and the air supply member 40 as the auxiliary component, thereby accelerating the heating efficiency of the electrode plate 90.

Referring to FIG. 7, in some embodiments, the oven 100 further comprises a first mounting portion 50 and a second mounting portion 60, the heating roller 20 is disposed between the first mounting portion 50 and the second mounting portion 60, and at least one of the first mounting portion 50 and the second mounting portion 60 is provided with an air supply member 40.

The first mounting portion 50 and the second mounting portion 60 can both extend along the first direction X, the first mounting portion 50 and the second mounting portion 60 are spaced apart, and a space for travelling the electrode plate 90 is reserved therebetween. The location of the air supply member 40 may be determined according to actual conditions. For example, in some examples, the air supply member 40 is mounted on the first mounting portion 50 or the second mounting portion 60. In other examples, both the first mounting portion 50 and the second mounting portion 60 are provided with an air supply member 40.

The above arrangement expands the positions where the air supply member 40 can be mounted and enriches the diversity of the internal structure of the oven 100.

Specifically, in some embodiments, the air supply members 40 provided on the first mounting portion 50 and the air supply members 40 provided on the second mounting portion 60 are arranged in a staggered manner.

For example, the air supply port of the air supply member 40 on the first mounting portion 50 may be arranged toward the heating roller 20, and the air supply port of the air supply member 40 on the second mounting portion 60 may be arranged toward the area between two adjacent heating rollers 20. In this way, the electrode plate 90 can be heated in multiple directions at the same time to speed up the heating speed for the electrode plate 90.

Further referring to FIG. 7, in some embodiments, the oven 100 also comprises a moisture detector 70, the box body 10 comprises a feed end 11 and a discharge end 12, the feed end 11 and the discharge end 12 are arranged opposite to each other along the first direction X, the heating roller 20 is located between the feed end 11 and the discharge end 12, and the moisture detector 70 is located on the side of the feed end 11 away from the discharge end 12.

Before the electrode plate 90 enters the area where the heating roller 20 is located, it can first pass through the moisture detector 70. The moisture detector 70 can detect the moisture inside the electrode plate 90. When the moisture content of the electrode plate 90 exceeds the preset value, the oven 100 will stop running to remind the user that the moisture content of the electrode plate 90 to be tested is too high and the user needs to replace it with an electrode plate 90 with a lower moisture content.

Referring to FIG. 7, in some embodiments, the oven 100 further comprises a flattening member 80, the flattening member 80 is disposed at the feed end 11 and the flattening member 80 is used for flattening the member to be oven-dried.

The flattening member can be a nip roller, which can be arranged on the side of the moisture detector 70 away from the discharge end 12. Before the electrode plate 90 enters the area where the heating roller 20 is located, the flattening member 80 can flatten the electrode plate 90 to smooth the surface of the electrode plate 90 and reduce the probability of wrinkling on the surface of the electrode plate 90.

Furthermore, some of the embodiments of the present application further provide a coating device. The coating device comprises the oven 100 provided in any one of the above embodiments. For details about the oven 100, please refer to the above description.

Referring to FIG. 7, in a specific example, the box body 10 comprises a feed end 11 and a discharge end 12 distributed along the first direction X. The interior of the box body 10 is provided with air supply members 40 and heating rollers 20 distributed at intervals along the first direction X. The distance between two adjacent heating rollers 20 is 500 mm. A moisture detector 70 and a flattening member 80 are further provided in the box body 10. The moisture detector 70 is located near the heating roller 20 at the feed end 11, and the flattening member 80 is located on the side of the moisture detector 70 away from the discharge end 12.

When the electrode plate 90 enters the box body 10, the electrode plate 90 first passes through the flattening member 80 and is flattened thereby, so as to reduce wrinkles formed on the surface of the electrode plate 90. Subsequently, the electrode plate 90 can be detected by the moisture detector 70. When the moisture content of the electrode plate 90 is higher than a preset moisture content, the oven 100 stops working to remind the user to replace the electrode plate 90 with one with a lower moisture content. When the electrode plate 90 meets the requirements, the electrode plate 90 continues to travel forward and enters the area where the heating roller 20 is located. The angle of contact formed between the electrode plate 90 and the heating roller 20 is 45°. The heating roller 20 and the air supply member 40 can heat the electrode plate 90 at the same time until the electrode plate 90 is discharged from the discharge end 12.

Since the angle of contact formed between the electrode plate 90 and the heating roller 20 is relatively large, the tension of the electrode plate 90 can be increased, thereby reducing the probability of curling and cracking of the electrode plate 90 during the drying process.

The technical features of the above embodiments can be combined arbitrarily. In order to make the description concise, not all possible combinations of the technical features in the above embodiments are described. However, all the combinations of the technical features should be considered as falling within the scope recorded in this specification provided that they do not conflict with each other.

The above-mentioned embodiments only describe several embodiments of the present application, and the description thereof is specific and detailed, but cannot therefore be understood as a limitation on the patent scope of the present application. It should be noted that those of ordinary skill in the art may further make variations and improvements without departing from the concept of the present application, all of which fall within the scope of protection of the present application. Therefore, the scope of protection of the present patent application shall be subject to the appended claims.

## Claims

1. An oven for heating a member to be oven-dried, comprising:
a box body;
a plurality of heating rollers, wherein among all the heating rollers, at least two adjacent heating rollers are capable of rotating in opposite directions relative to the box body, the plurality of heating rollers are arranged at intervals in the box body along a first direction, and all of the heating rollers jointly support and guide the member to be oven-dried to travel along the first direction;
an angle of contact a is formed between the heating roller and the member to be oven-dried, and the angle of contact a satisfies: 30°≤a≤180°.

2. The oven according to claim 1, wherein a first hollow cavity is formed inside the heating roller, the heating roller is rotatably connected to the box body, the surface of the heating roller is used for tensioning the member to be oven-dried, and the first hollow cavity is used for connecting an external heat exchange medium flow path.

3. The oven according to any one of claims 1 to 2, wherein the oven further comprises tensioning rollers, each of the heating rollers is provided with at least one of the tensioning rollers, the tensioning roller and the heating roller rotate in opposite directions, and the heating roller and the tensioning roller are both used for guiding an electrode plate.

4. The oven according to claim 3, wherein the diameter of the tensioning roller is smaller than the diameter of the heating roller.

5. The oven according to claim 3, wherein along the first direction, each of the heating rollers is provided with a tensioning roller on both side thereof, an angle of contact is formed between the heating roller and the member to be oven-dried, and the angle of contact is less than or equal to 180°.

6. The oven according to claim 3, wherein the heating rollers each comprise a feed heating roller and a discharge heating roller, the feed heating roller is located at the feed end of the box body, the discharge heating roller is located at the discharge end of the box body, the feed heating roller and the discharge heating roller are each provided with a tensioning roller, and the tensioning roller of the feed heating roller and the tensioning roller of the discharge heating roller are arranged facing each other;
a tensioning roller is provided on both sides of the other heating rollers along the first direction, an angle of contact is formed between the heating roller and the member to be oven-dried, and the angle of contact is less than or equal to 180°.

7. The oven according to claim 3, wherein a second hollow cavity is formed inside the tensioning roller, the surface of the tensioning roller is used for tensioning the member to be oven-dried, and the second hollow cavity is used for connecting an external heat exchange medium flow path.

8. The oven according to any one of claims 1 to 7, wherein the distance between two adjacent heating rollers is L, which satisfies: 400 mm ≤ L < 1400 mm.

9. The oven according to any one of claims 1 to 8, wherein the oven further comprises an air supply member, the air supply member is provided on the inner wall of the oven, and the air supply port of the air supply member is oriented in the direction where the heating roller is located.

10. The oven according to claim 9, wherein the oven further comprises a first mounting portion and a second mounting portion, the heating roller is disposed between the first mounting portion and the second mounting portion, and the air supply member is disposed on at least one of the first mounting portion and the second mounting portion.

11. The oven according to claim 10, wherein the air supply member provided on the first mounting portion and the air supply member provided on the second mounting portion are arranged in a staggered manner.

12. The oven according to any one of claims 1 to 11, wherein the oven further comprises a moisture detector, the box body comprises a feed end and a discharge end, the feed end and the discharge end are arranged opposite to each other along the first direction, the heating roller is located between the feed end and the discharge end, and the moisture detector is arranged on the side of the feed end away from the discharge end.

13. The oven according to claim 12, wherein the oven further comprises a flattening member, the flattening member is provided at the feeding end and the flattening member is used for flattening the member to be oven-dried.

14. A coating device, comprising the oven according to any one of claims 1 to 13.
